# DEMANDE DE BREVET EUROPEEN

(11) **EP 2 789 932 A1**
(43) Date de publication de la demande: **15.10.2014**
(21) Numéro de dépôt: 14164123.3
(22) Date de dépôt: 10.04.2014
(51) Int. Cl.: F24J 2/52

(54) **Support d'objets sur container comprenant des coins ISO**

(30) Priorité: 10.04.2013 FR 1300829
(71) Demandeur: Thales, 92200 Neuilly Sur Seine (FR)
(72) Inventeur: CHIRON, Yohann, 49309 CHOLET (FR); MICHAUD, Grégory, 49309 CHOLET (FR)
(74) Mandataire: Dudouit, Isabelle

(57) **Abrégé**

Support d'objets sur container (4) ou « structure » comprenant un ou plusieurs coins ISO (C₁, C₂) caractérisé en ce qu'il comporte au moins les éléments suivants :
• un ou plusieurs verrous escamotables modifiés (3) comprenant une plateforme d'accueil (20) de moyens d'accrochage, ladite plate-forme (20) étant solidaire d'une paroi (11) d'un verrou escamotable (10) et un moyen de renfort (21 A, 21 B), le ou les verrous escamotables modifiés (3) étant disposés au niveau des « coins ISO » du container (4),
• un cadre (40) supportant l'objet à disposer sur le container (4),
• le cadre (40) étant sécurisé auxdits verrous escamotables modifiés (3) à l'aide de moyens de fixation (30, 50).

Application pour support de panneaux solaires sur container.

## Description

L'objet de l'invention concerne notamment un support de panneaux solaires sur un container ou shelter. Elle trouve son application pour positionner sur un toit comprenant des emplacements prédéfinis un support de panneaux solaires, d'antennes ou d'autres objets. Les emplacements prédéfinis peuvent être des supports ISO connus de l'Homme du métier.

L'un des problèmes techniques posé est de pouvoir installer sur le toit d'un container ou d'un shelter des panneaux solaires sans apporter de modifications à la structure du container, afin que ce dernier conserve ses spécificités et reste conforme à une norme définie.

Pour fixer des panneaux solaires sur le toit d'un container plusieurs solutions spécifiques ont été développées. Ces solutions répondent en général à des besoins particuliers. Dans la plupart des cas, les supports sont vissés ou boulonnés sur le container par l'intermédiaire de pièces adaptées. Dans la majorité des cas, les systèmes proposés impliquent une modification du container, ou le perçage du container. Par ailleurs, ces systèmes sont complexes à mettre en oeuvre. Ils sont peu évolutifs, peu adaptables. Il est en général difficile de les installer de façon temporaire. De plus, la modification de la structure d'un container peut le rendre non conforme à la règlementation.

Le brevet DE 20 2009 017491 décrit un mode de fixation fixe et rigide qui suppose d'altérer la structure sur laquelle est fixée un panneau.

La demande de brevet US 2012/267328 présente une structure à base de profilés pour supporter des panneaux solaires, où la liaison au sol est assurée par des poteaux scellés dans le sol.

Le document DE 20 20011 001320 décrit une structure de profilés équipée de clips.

Le brevet EP 2 327 941 divulgue une structure assemblée par des clips, la liaison mécanique de cette structure avec une autre structure d'origine utilise des câbles vissés fixés dans la structure d'origine.

Le document EP 2 108 899 présente un système de verrou et rail, le rail est fixé au moyen de sabots boulonnés dans la structure.

Un des objectifs de la présente invention est, notamment, de fournir des moyens d'installation de panneaux solaires sur le toit d'un container ou d'un abri ou « shelter », sans y apporter de modification structurelle. Il n'y a donc pas de perçage dans la coque ou la structure du shelter. L'invention fournit une fixation simple et rapide du support panneaux solaires sur les coins ISO équipant habituellement les containers ou shelters au moyen de verrous escamotables adaptés pour l'invention.

L'invention s'applique aussi pour l'installation d'objets sur une structure comprenant des emplacements prédéfinis adaptés à recevoir des verrous escamotables.

L'invention concerne un support d'objets sur container ou « structure » comprenant un ou plusieurs coins ISO, caractérisé en ce qu'il comporte au moins les éléments suivants :
- un ou plusieurs verrous escamotables modifiés comprenant une plateforme d'accueil de moyens d'accrochage, ladite plate-forme étant solidaire d'une paroi d'un verrou escamotable et un moyen de renfort, le ou les verrous escamotables modifiés étant disposés au niveau de « coins ISO » du container,
- un cadre supportant un objet à disposer sur le container,
- le cadre étant sécurisé auxdits verrous escamotables modifiés à l'aide de moyens de fixation.

Le cadre est, par exemple, fixé au niveau des quatre coins ISO du container.

La plate-forme peut être une platine comprenant plusieurs orifices Oi adaptés à recevoir des vis ou moyens de fixation et les moyens de fixation sont constitués d'un sabot comprenant une partie plate comprenant plusieurs orifices correspondant aux orifices Oi, ladite partie plate comprenant deux flancs pourvus chacun d'un orifice pour le passage de moyens équivalent.

L'espacement entre les deux flancs est, par exemple, adapté au positionnement d'un contre-sabot comprenant une platine et une chape pourvue d'un orifice correspondant aux orifices du sabot.

Un contre-sabot est, par exemple, fixé sous une platine du cadre, le sabot et le contre-sabot sont assemblés par des moyens de fixation.

Les moyens de fixation du cadre auxdits verrous escamotables comprennent, par exemple, un premier support fixé à une première extrémité d'une barre d'orientation du panneau solaire, le premier support étant fixé au cadre et un deuxième support fixé à la platine du verrou escamotable modifié, ledit deuxième support étant fixé à une deuxième extrémité de la barre.

L'une des extrémités de la barre est fixée au niveau d'un pied à rotule.

Le support d'objets est par exemple utilisé pour des panneaux solaires.

L'invention concerne aussi, de manière plus générale, un support d'objets sur container ou « structure » comprenant un ou plusieurs emplacements adaptés à recevoir des moyens de fixation, caractérisé en ce qu'il comporte au moins les éléments suivants :
- un ou plusieurs verrous escamotables modifiés comprenant une plateforme d'accueil de moyens d'accrochage, ladite plate-forme étant solidaire d'une paroi d'un verrou escamotable et un moyen de renfort, le ou les verrous escamotables modifiés étant disposés au niveau desdits emplacements adaptés à recevoir des moyens de fixation,
- un cadre supportant un objet à disposer sur le container,
- le cadre étant sécurisé auxdits verrous escamotables modifiés à l'aide de moyens de fixation.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, une vue d'ensemble d'un support pour panneaux solaire montés sur un container,
- Les figures 2A, 2B, 2C, différentes vues d'un verrou escamotable modifié selon l'invention,
- La figure 3, un sabot venant se fixer sur le verrou escamotable selon l'invention,
- La figure 4, un châssis sur lequel sont montés des panneaux solaires,
- La figure 5, un contre-sabot permettant la fixation d'une barre,
- La figure 6, le châssis soutenant les panneaux solaires et les barres de fixation du châssis que le container,
- La figure 7, un détail sur la liaison assurant le maintien entre un verrou escamotable selon l'invention et le châssis support des panneaux,
- La figure 8, une autre liaison par l'intermédiaire d'une barre d'orientation,
- La figure 9, l'installation des panneaux solaires, et
- La figure 10, l'ajout d'éléments permettant de renforcer la structure obtenue.

Afin de mieux faire comprendre l'objet de la présente invention, l'exemple qui suit donné à titre illustratif et nullement limitatif, concerne un support pour panneaux solaires sur un container utilisant les coins ISO du container et plusieurs verrous escamotables modifiés.

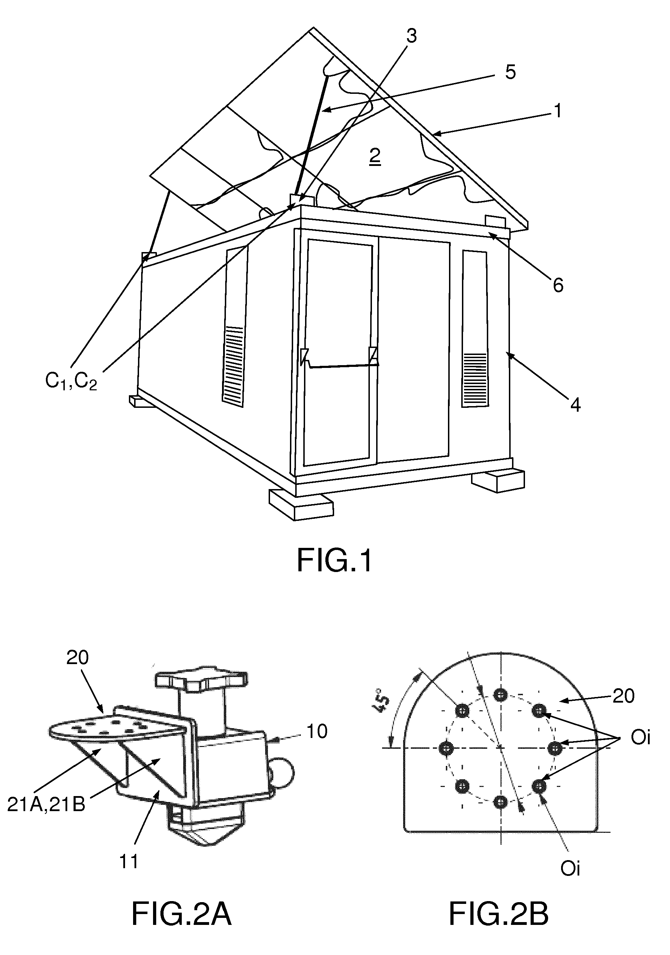

La figure 1 schématise une vue d'ensemble d'un support 1 pour panneaux solaires 2 sur un container 4, fixé au moyen de quatre verrous escamotables 3 modifiés selon l'invention. Le support 1 est orientable au moyen de barres d'orientation 5. Dans cet exemple, la fixation se fait sur les quatre coins ISO C₁, C₂, C₃, C₄ du toit 6 du container 4. Les coins ISO du container sont adaptés à recevoir un verrou tournant, un verrou escamotable, ou un moyen équivalent de fixation, connus de l'Homme du métier et utilisés habituellement pour le levage des containers.

La figure 2A représente un exemple de verrou escamotable modifié selon l'invention. Le verrou escamotable modifié est composé d'un verrou escamotable 10 connu de l'Homme du métier transformé en ajoutant sur un de ses côtés 11 une plaque support ou platine 20 ayant pour fonction de recevoir un moyen d'accrochage du châssis qui va supporter les panneaux solaires et deux flancs de renforts 21 A, 21 B. Les deux flancs sont par exemple soudés à la platine 20 pour assurer une certaine rigidité et une tenue aux efforts et à la charge.

La figure 2B est une vue de dessus de la platine 20 du verrou escamotable comprenant plusieurs orifices Oi qui vont permettre le passage de vis ou autres moyens de fixation.

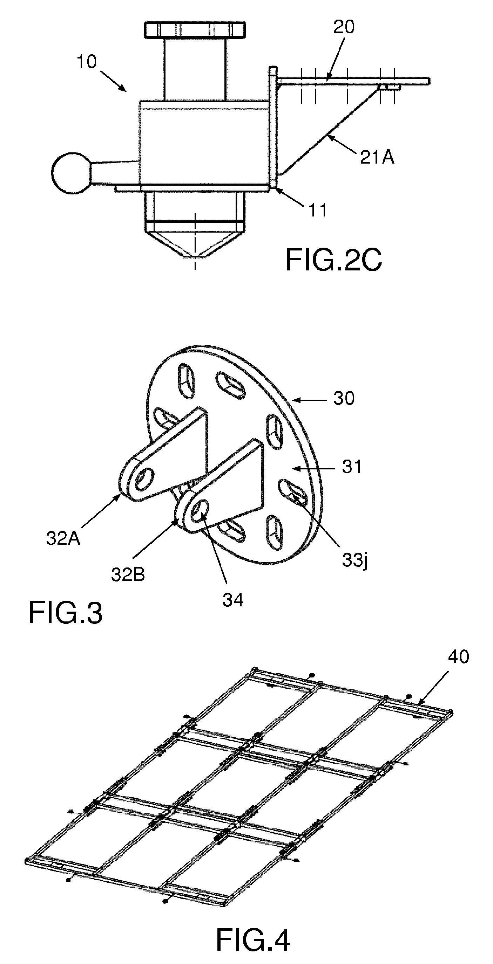

La figure 2C, est une vue en coupe du verrou escamotable modifié selon l'invention montrant la position de la platine 20 et d'un flanc de renfort 21 A.

La figure 3 schématise un « sabot » 30 qui vient se fixer sur la platine et qui permet la fixation d'une barre 5 d'orientation du support. Le sabot 30 est composé d'une partie plate 31 comprenant plusieurs orifices 33j correspondant aux orifices Oi du verrou escamotable modifié et de deux flancs 32A, 32B pourvus chacun d'un orifice 34 pour le passage de vis de fixation ou de moyens équivalent. L'espacement entre les deux flancs 32A, 32B permet le positionnement d'un contre-sabot décrit ci-après.

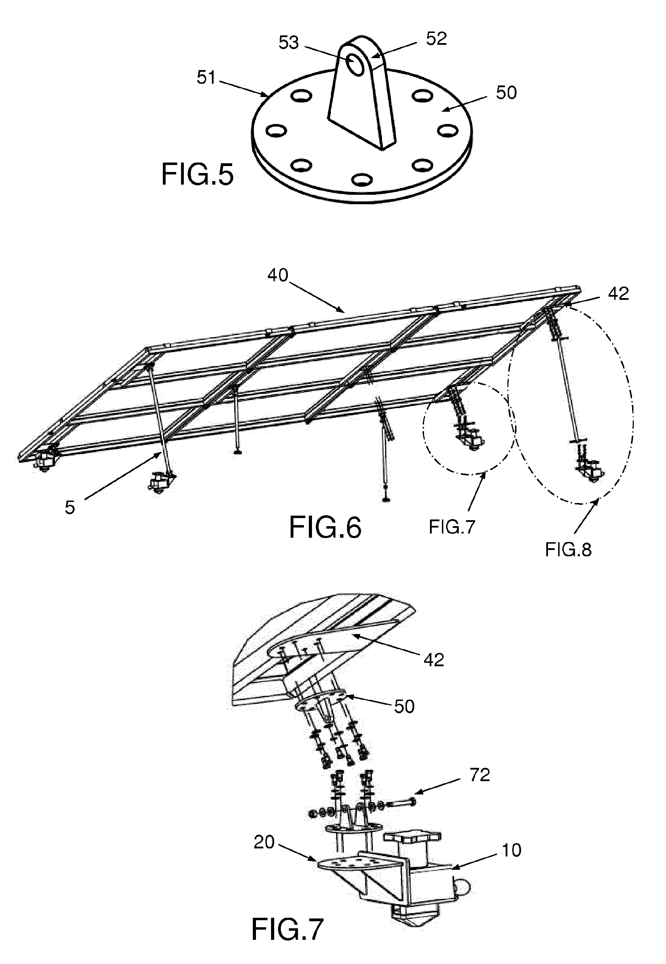

La figure 4 schématise le châssis 40 recevant les panneaux solaires. Le châssis est composé de trois sous-cadres qui sont assemblés au sol au moyen de vis et écrous, formant ainsi un grand cadre ou châssis 40. Sous le grand cadre sont disposées une ou plusieurs platines 42 (figure 7) destinées à recevoir un sabot de fixation ou support de fixation. Par exemple, on va monter quatre platines 42 (figure 7) sous le grand cadre 40.

La figure 5 représente un support pivot ou contre-sabot 50 qui vient se fixer comme il est représenté sur la figure 7 sous une platine du grand cadre. Le contre-sabot 50 comprend une platine 51 et une chape 52 pourvue d'un orifice 53, correspondant aux orifices 34 du sabot 30.

La figure 6 représente le montage de supports 2 sur le châssis 40 sur lequel on vient fixer une ou plusieurs barres d'orientation.

La figure 7 est une vue d'un détail de la figure 6. Sur la platine 20 d'un verrou escamotable modifié est fixé un contre-sabot 50 fixé sous la platine 42 du grand cadre. Le support ou sabot 30 et le contre-sabot 50 sont assemblés au moyen de vis et d'écrous 72.

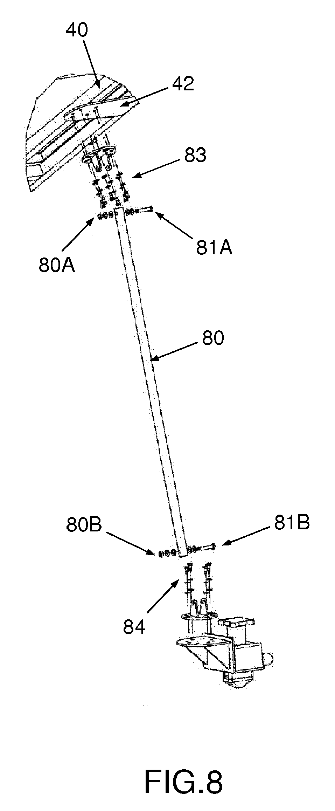

La figure 8 schématise la mise en place d'une barre d'orientation 80 qui est fixée d'une part au grand cadre et d'autre part à la platine d'un verrou escamotable modifié. Pour cela le tube 80 est pourvu au niveau de chacune de ses extrémités 80A, 80B, d'orifices 81 A, 81 B permettant le passage de vis 83 et écrous 84 ou de moyen de fixation équivalent. Le tube peut être monté sur un pied à rotule non représenté pour des raisons de simplicité.

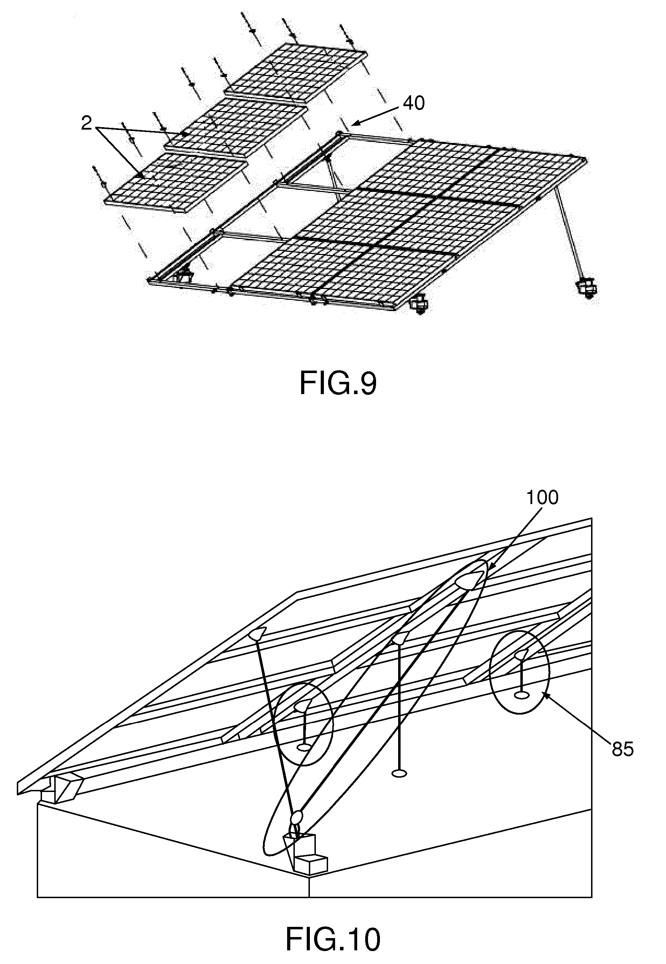

Pour la mise en place de la structure les étapes suivantes seront effectuées :
- les verrous escamotables 10 sont posés et serrés à force sur les quatre coins ISO, C₁, C₂, C₃, C₄, du container 4,
- le grand cadre est ensuite levé au-dessus du toit du container, puis le grand cadre est fixé aux verrous escamotables 10 avec des vis et des écrous, ainsi que les barres d'orientation prévues à cet effet et décrites aux figures précédentes. Pour cela le grand cadre est, par exemple, équipé de plusieurs anneaux de levage pour faciliter la manutention de la structure sur le toit du container,
- les barres 5 d'orientation du support sont positionnées sur le container 4 et au niveau du grand cadre,
- deux pieds centraux 85 (figure 10) sont montés et fixés entre le grand cadre et le toit 6 du container 4. Puis la hauteur des pieds est ajustée pour délester le poids propre de la structure.

La figure 9 représente la mise en place des panneaux solaires 2 (figure 1) sur le châssis. Les panneaux solaires 2 sont posés et fixés sur le grand cadre 40 à l'aide de brides de serrages et de visserie.

La figure 10 représente une variante de réalisation dans laquelle on ajoute une ou plusieurs barres de renfort obliques 100 pour une meilleure tenue au vent. Les pieds à rotule 85 ajoutés en partie basse permettent de soulager le poids propre du châssis.

Sans sortir du cadre de l'invention, le principe de fixation décrit précédemment pour l'utilisation de verrous escamotables modifiés pour le support de panneaux solaires sur un toit d'un container peut s'appliquer aussi pour la fixation d'un mât, d'une antenne, d'un radar, d'une parabole, d'un goniomètre, d'une éolienne,

Il est aussi possible d'envisager son utilisation pour équiper des bâtiments de type préfabriqués, mobil home, etc. équipés d'endroits prévus pour recevoir des verrous escamotables.

Les barres d'orientation peuvent être associées à un système motorisé, asservi qui permet de suivre l'inclinaison solaire. Les barres d'orientation sont, par exemple, adaptées pour assurer une inclinaison des panneaux solaires dans le sens de la largeur et/ou de la longueur du container.

La structure selon l'invention offre notamment l'avantage d'être rapide, et simple d'installation. L'intégration physique sur le container se fait sans aucune modification de ce dernier. L'installation sur le container peut être réalisée sans nécessairement être propriétaire du container qui n'est pas modifié. Il n'y a pas de risque de corrosion ou d'endommagement car le container n'est pas modifié.

## Revendications

1. Support d'objets sur container (4) comprenant un ou plusieurs coins ISO (C₁, C₂) **caractérisé en ce qu'**il comporte au moins les éléments suivants :
• un ou plusieurs verrous escamotables modifiés (3) comprenant une plateforme d'accueil (20) de moyens d'accrochage, ladite plate-forme (20) étant solidaire d'une paroi (11) d'un verrou escamotable (10) et un moyen de renfort (21 A, 21 B), le ou les verrous escamotables modifiés (3) étant disposés au niveau de « coins ISO » du container (4),
• un cadre (40) supportant un objet (2) à disposer sur le container (4),
• le cadre (40) étant sécurisé auxdits verrous escamotables modifiés (3) à l'aide de moyens de fixation (30, 50).

2. Support d'objets selon la revendication 1 **caractérisé en ce que** le cadre (40) est fixé au niveau des quatre coins ISO du container.

3. Support d'objets selon la revendication 1 **caractérisé en ce que** la plate-forme (20) est une platine comprenant plusieurs orifices Oi adaptés à recevoir des vis ou moyens de fixation et **en ce que** les moyens de fixation (30) sont constitués d'un sabot comprenant une partie plate (30) comprenant plusieurs orifices (33j) correspondant aux orifices Oi, ladite partie plate (31) comprenant deux flancs (32A, 32B) pourvus chacun d'un orifice (34) pour le passage de moyens équivalent.

4. Support d'objets selon la revendication 3 **caractérisé en ce que** l'espacement entre les deux flancs (32A, 32B) est adapté au positionnement d'un contre-sabot (50) comprenant une platine (51) et une chape (52) pourvue d'un orifice (53) correspondant aux orifices (34) du sabot (30).

5. Support d'objets selon la revendication 4 **caractérisé en ce que** un contre-sabot (50) est fixé sous une platine (42) du cadre (40), le sabot (30) et le contre-sabot (50) sont assemblés par des moyens de fixation (72).

6. Support d'objets selon la revendication 3 **caractérisé en ce que** les moyens de fixation du cadre (40) auxdits verrous escamotables comprennent un premier support (30) fixé à une première extrémité (80A) d'une barre d'orientation (80) du panneau solaire, le premier support (30) étant fixé au cadre et un deuxième support (30) fixé à la platine (20) du verrou escamotable modifié, ledit deuxième support (30) étant fixé à une deuxième extrémité (80B) de la barre (80).

7. Support d'objets selon la revendication 6 **caractérisé en ce que** l'une des extrémités de la barre (80) est fixée au niveau d'un pied à rotule (85).

8. Support d'objets selon l'une des revendications 1 ou 2 **caractérisé en ce que** l'objet (2) est un panneau solaire.

9. Support d'objets sur container (4) comprenant un ou plusieurs emplacements adaptés à recevoir des moyens de fixation **caractérisé en ce qu'**il comporte au moins les éléments suivants :
• un ou plusieurs verrous escamotables modifiés (3) comprenant une plateforme d'accueil (20) de moyens d'accrochage, ladite plate-forme (20) étant solidaire d'une paroi (11) d'un verrou escamotable (10) et un moyen de renfort (21 A, 21 B), le ou les verrous escamotables modifiés (3) étant disposés au niveau desdits emplacements adaptés à recevoir des moyens de fixation,
• un cadre (40) supportant un objet (2) à disposer sur le container (4),
• le cadre (40) étant sécurisé auxdits verrous escamotables modifiés (3) à l'aide de moyens de fixation (30, 50).
